# EUROPÄISCHE PATENTSCHRIFT

(11) **EP 3 645 373 B1**
(45) Veröffentlichungstag und Bekanntmachung des Hinweises auf die Patenterteilung: **28.07.2021**
(21) Anmeldenummer: 18735533.4
(22) Anmeldetag: 25.06.2018
(51) Int. Cl.: B62D 5/04, F16H 1/16, B29C 65/64, B29C 65/00

(54) **VERFAHREN ZUR MONTAGE EINER KUPPLUNG EINER KRAFTFAHRZEUGLENKUNG MITTELS ULTRASCHALLSCHWEISSEN**
METHOD FOR MOUNTING A COUPLING MEMBER OF A MOTOR VEHICLE STEERING MECHANISM USING ULTRASONIC WELDING
PROCÉDÉ DESTINÉ AU MONTAGE D'UN ACCOUPLEMENT DE DIRECTION DE VÉHICULE AUTOMOBILE AU MOYEN D'UN SOUDAGE PAR ULTRASON

(30) Priorität: 27.06.2017 DE 102017114204
(43) Veröffentlichungstag der Anmeldung: 06.05.2020
(73) Patentinhaber: thyssenkrupp Presta AG, 9492 Eschen (LI); thyssenkrupp AG, 45143 Essen (DE)
(72) Erfinder: KNOLL, Peter, 88131 Lindau (DE); VONIER, Felix, 6780 Schruns (AT)
(74) Vertreter: thyssenkrupp Intellectual Property GmbH
(86) Internationale Anmeldenummer: PCT/EP2018/066911
(87) Internationale Veröffentlichungsnummer: WO 2019/002184

(56) Entgegenhaltungen:
- WO-A1-2008/093861
- CN-A- 106 505 792
- DE-A1-102013 207 142
- DE-A1-102015 201 938

## Beschreibung

Die vorliegende Erfindung betrifft eine Kraftfahrzeuglenkung mit den Merkmalen des Oberbegriffs des Anspruchs 1 und ein Verfahren zur Verbindung einer Welle einer Kraftfahrzeuglenkung mit einem Kupplungsteil einer Kupplung mit den Merkmalen des Oberbegriffs des Anspruchs 5.

Elektromechanische Kraftfahrzeugservolenkungen weisen Servoeinheiten auf, die als Hilfskraftunterstützungseinrichtung an einem Ritzel oder einer Zahnstange oder als Überlagerungslenkung an der Lenksäule des Lenkgetriebes angeordnet sein können. In Steer-by-Wire Lenkungen ist ein elektrischer Motor als Teil eines Feedback-Aktuators vorgesehen. Sowohl die Servoeinheit als auch der elektrische Motor der Steer-by-Wire-Lenkung weisen eine Motorwelle auf, die über eine Kupplung Drehmomente bzw. Drehbewegungen auf eine Schneckenwelle übertragen kann. Dabei sind eine erste Kupplungshälfte auf der Schneckenwelle und eine zweite Kupplungshälfte auf der Motorwelle angeordnet.

Aus der Offenlegungsschrift DE 2016 216 457 A1 ist eine Kupplung bekannt, die auf einer Schnecke angeordnet ist. Dabei weist die Schnecke auf dem Abschnitt, auf dem sie mit der Kupplung verbunden ist, eine Außen-Kerbverzahnung auf. Die Kupplung hat entsprechend eine Innenverzahnung. Die Kupplung wird dabei auf die Wellenteile aufgepresst. Nachteilig erweist sich diese Lösung dahingehend, dass nur kleine Drehmomente übertragen werden können, da die Zahnfußtragfähigkeit der Verzahnung gering ist. Weiterhin ergeben sich Herstellungsprobleme und es können Risse auf den Bauteilen entstehen, wodurch sich die Lebensdauer verkürzt.

Eine Kupplung der eingangs genannten Art ist in der WO 2008/093861 A1 beschrieben. Diese erfordert einen relativ hohen Fertigungsaufwand.

Es ist Aufgabe der vorliegenden Erfindung, eine Verbindung zwischen den Wellenteilen und der Kupplung zu schaffen, die eine einfachere Herstellung ermöglicht.

Diese Aufgabe wird von einer Kraftfahrzeuglenkung mit den Merkmalen des Anspruchs 1 und einem Verfahren zur Verbindung einer Welle einer Kraftfahrzeuglenkung mit einem Kupplungsteil einer Kupplung mit den Merkmalen des Anspruchs 5 gelöst.

Demnach ist eine Kraftfahrzeuglenkung, umfassend einen Elektromotor mit einer Motorwelle, ein Schneckengetriebe mit einer Schneckenwelle und eine Kupplung, die die beiden Wellen zur Übertragung eines Drehmomentes verbindet, vorgesehen, wobei die Kupplung ein erstes Kupplungsteil und ein zweites Kupplungsteil aufweist, das jeweils mit einer der Wellen verbunden ist, und wobei das entsprechende Kupplungsteil aus einem thermoplastischen Kunststoff gefertigt ist und mindestens eine der Wellen mit dem entsprechenden Kupplungsteil mittels Ultraschallschweißen verbunden ist, wobei die zu verbindende Welle auf einer Außenseite in einem Befestigungsbereich eine Rändelung aufweist.

Es ist vorteilhaft, dass das entsprechende Kupplungsteil aus einem thermoplastischen Kunststoff gefertigt ist und bei dem Einleiten der hochfrequenten mechanischen Schwingung in die Welle das entsprechende Kupplungsteil teilweise erwärmt und plastifiziert wird. Plastifizierung bezeichnet dabei den Übergang vom festen in einen verformbaren oder fließfähigen Zustand, um die Weiterverarbeitung zu erleichtern oder zu ermöglichen.

In der erfindungsgemäßen Ausführungsform weist die Welle auf der Außenseite eine Rändelung auf und das plastifizierte Kupplungsteil umfließt die Hinterschneidungen der Rändelung, sodass nach dem Abkühlen eine form- und stoff-schlüssige Verbindung zwischen dem Kupplungsteil und der Welle entsteht.

Durch das Ultraschallschweißen können hohe Spannungen in dem Kupplungsteil durch Formschluss vermieden werden. Zudem können kurze Taktzeiten realisiert werden, da das Einsetzen von herkömmlich verwendeten Spritzgusseinsätzen mit einer Pressverbindung entfällt und kein Vorwärmen von Metallteilen notwendig ist. Außerdem wird verhindert, dass die Bauteile beim unsachgemäßen Positionieren der Gewindeeinsätze beschädigt werden.

Vorzugsweise ist die Verbindung zwischen der mindestens einen Welle und dem entsprechenden Kupplungsteil stoff- und formschlüssig. Es ist bevorzugt, wenn die zu verbindende Welle als Sonotrode während des Ultraschallschweißens fungiert.

In einer bevorzugten Ausführungsform weist die zu verbindende Welle auf einer Außenseite in einem Befestigungsbereich eine Rändelung auf. Es kann aber auch vorgesehen sein, dass das zu verbindende Kupplungsteil auf einer Innenseite in einem Befestigungsbereich eine Rändelung aufweist und die Welle auf der Außenseite glatt ist.

Es ist bevorzugt, wenn sowohl die Schneckenwelle als auch die Motorwelle mit dem jeweiligen Kupplungsteil, wie zuvor beschrieben, verbunden ist.

Weiterhin ist ein Verfahren zur Verbindung einer Welle einer Kraftfahrzeuglenkung mit einem Kupplungsteil einer Kupplung, die zwei Wellen verbindet, vorgesehen, wobei eine der Wellen eine Schneckenwelle und die andere Welle eine Motorwelle eines Elektromotors der Kraftfahrzeuglenkung ist, und wobei die Kupplung zwei Kupplungsteile aufweist, die jeweils mit einer der Wellen verbunden sind, wobei das Verfahren folgende Schritte aufweist:
- Zumindest teilweises Einbringen der Welle in das entsprechende Kupplungsteil mit einem definierten Anpressdruck,
- Einleiten einer hochfrequenten mechanischen Schwingung im Ultraschallbereich in die Welle,
- Einpressen der Welle in das entsprechende Kupplungsteil mit einem definierten Anpressdruck,
wobei das entsprechende Kupplungsteil (21,14) aus einem thermoplastischen Kunststoff gefertigt ist und dass bei dem Einleiten der hochfrequenten mechanischen Schwingung in die Welle (20,12) das entsprechende Kupplungsteil (21,14) teilweise erwärmt und plastifiziert wird,
wobei die Welle (20,12) auf der Außenseite eine Rändelung (17) aufweist und das plastifizierte Kupplungsteil (21,14) Hinterschneidungen der Rändelung (17) umfließt, sodass nach dem Abkühlen eine form- und stoffschlüssige Verbindung zwischen dem Kupplungsteil (21,14) und der Welle (20,12) entsteht.

Vorzugsweise liegt die hochfrequente Schwingung in einem Bereich von 10 bis 40 kHz und beträgt insbesondere 20 kHz.

Bei der Kraftfahrzeuglenkung kann es sich um eine elektromotorische Servolenkung handeln, bei der eine Servoeinheit als Überlagerungslenkung über das Schneckengetriebe auf die Lenkwelle wirkt. Es kann aber auch eine Steer-by-Wire-Lenkung sein, bei der der Elektromotor und das Schneckengetriebe Teil eines Feedback-Aktuators sind.

Nachfolgend werden Ausführungsbeispiele der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine schematische Darstellung einer elektromechanischen Servolenkung,
- Figur 2:: eine räumliche Darstellung eines Getriebes eines Servoantriebs der Lenkwelle gemäß Figur 1,
- Figur 3:: eine zweite räumliche Darstellung des Getriebes der Lenkwelle,
- Figur 4:: eine seitliche Ansicht einer Schneckenwelle des Getriebes mit einem ersten Kupplungsteil,
- Figur 5:: eine Explosionsdarstellung der Schneckenwelle mit Kupplungsteil,
- Figur 6:: eine Explosionsdarstellung einer mit Rändelung versehenen Schneckenwelle mit Kupplungsteil,
- Figur 7:: eine schematische Darstellung des Ultraschallschweißens von Schneckenwelle und Kupplungsteil mit Sonotrode,
- Figur 8:: ein Längsschnitt durch die mit dem Kupplungsteil verbundene Schneckenwelle, sowie
- Figur 9:: ein Längsschnitt durch eine mit einem zweiten Kupplungsteil verbundene Motorwelle des Servoantriebs.

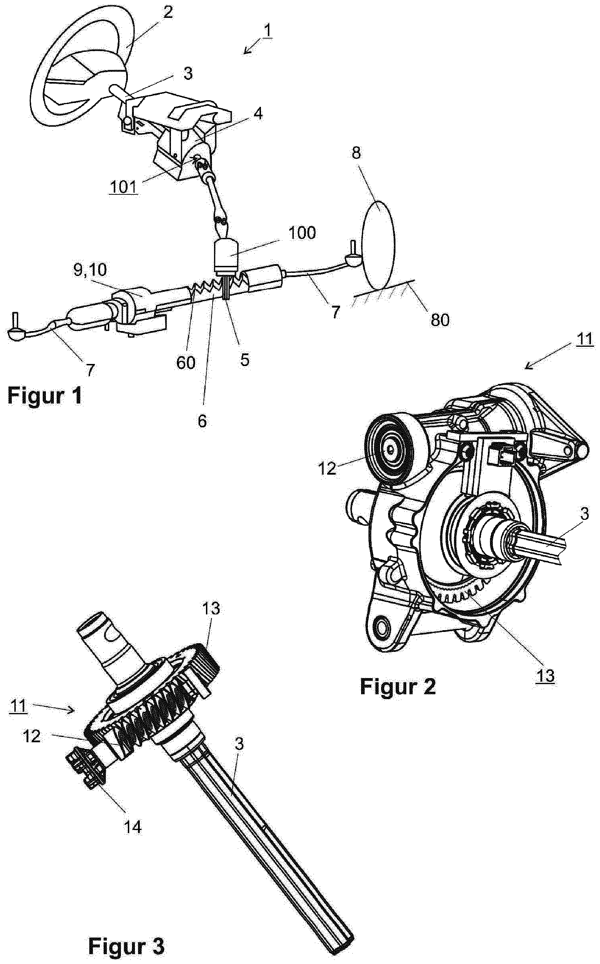

In der Figur 1 ist eine herkömmliche elektromechanische Kraftfahrzeugservolenkung 1 mit einem Lenkrad 2, das mit einer Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die Lenkwelle 3 auf ein Lenkritzel 5 übertragen.

Das Ritzel 5 kämmt in bekannter Weise mit einem Zahnsegment 60 einer Zahnstange 6. Das Lenkritzel 5 bildet zusammen mit der Zahnstange 6 ein Lenkgetriebe. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden.

Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 mit einem Rotorlagensensor (RPS) und einer Servoeinheit 10 ist vorgesehen, um dem Fahrer bei dieser Lenkbewegung zu unterstützen. Die Servoeinheit 10 kann dabei entweder mit einer Lenkwelle 3, dem Lenkritzel 5 oder der Zahnstange 6 gekoppelt sein. Die jeweilige Hilfskraftunterstützung trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungen 10, 100, 101 zeigen alternative Positionen für deren Anordnung. Üblicherweise ist nur eine einzige der gezeigten Positionen mit einer Hilfskraftunterstützung belegt. Die Servoeinheit kann dabei als Überlagerungslenkung an der Lenksäule oder als Hilfskraftunterstützungseinrichtung an dem Ritzel 5 oder der Zahnstange 6 angeordnet sein.

In der Figur 2 ist die Alternative, bei der die Servoeinheit an der Lenkwelle 3 angeordnet ist, dargestellt. Von einem nicht gezeigten Elektromotor wird das Schneckengetriebe 11 angetrieben. Wie in Figur 3 im Detail gezeigt, greift eine Schneckenwelle 12 in ein mit der Lenkwelle 3 drehfest verbundenes Schneckenrad 13 ein.

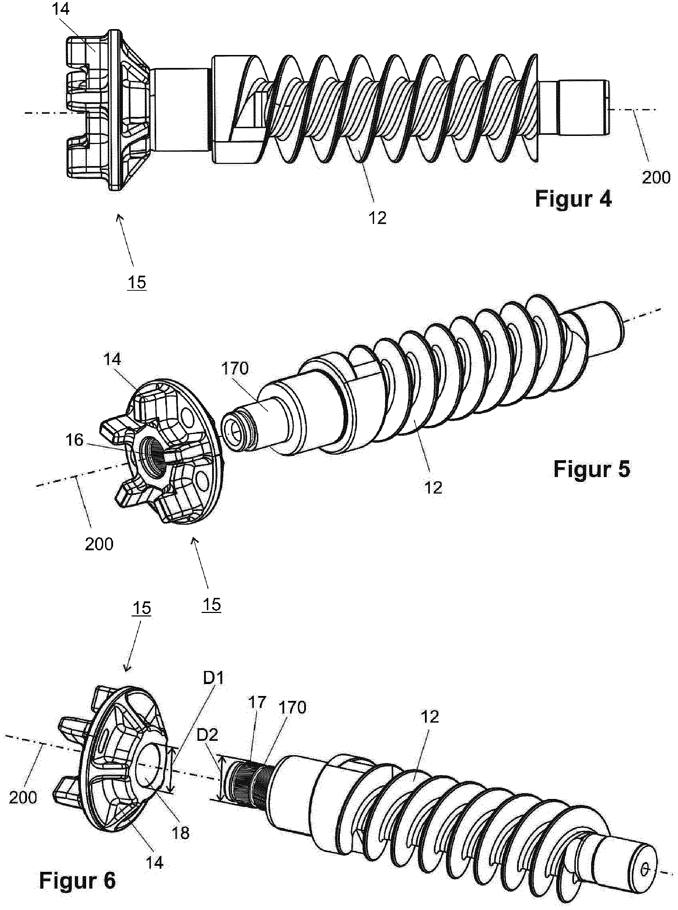

Die Figuren 4 bis 6 zeigen die Schneckenwelle 12 und ein erstes Kupplungsteil 14. Das erste Kupplungsteil 14 ist Teil einer Kupplung 15, die eine Motorwelle 20 des Elektromotors und die Schneckenwelle 12 des Getriebes drehfest miteinander verbindet. Das erste Kupplungsteil 14 ist drehfest mit der Schneckenwelle 12 mittels Ultraschallschweißen verbunden. Wie in Figur 5 dargestellt ist, weist in einem ersten Ausführungsbeispiel das erste Kupplungsteil 14 in dem Befestigungsbereich für das Ultraschallschweißen eine Innenverzahnung 16 auf. Im Gegensatz dazu ist die Oberfläche der Schneckenwelle 12 in dem Befestigungsbereich bevorzugt eben oder glatt ausgestaltet. In einem zweiten Ausführungsbeispiel, das in Figur 6 dargestellt ist, ist die Schneckenwelle 12 mit einer Außenverzahnung 17 versehen und das erste Kupplungsteil 14 ist bevorzugt eben oder glatt ausgestaltet.

Die Verzahnung kann eine Rändelung sein, die beispielsweise als Kreuzrändelung oder Längsrändelung, als Geradrändelung oder als Querrändelung oder als Schrägrändelung ausgeführt ist.

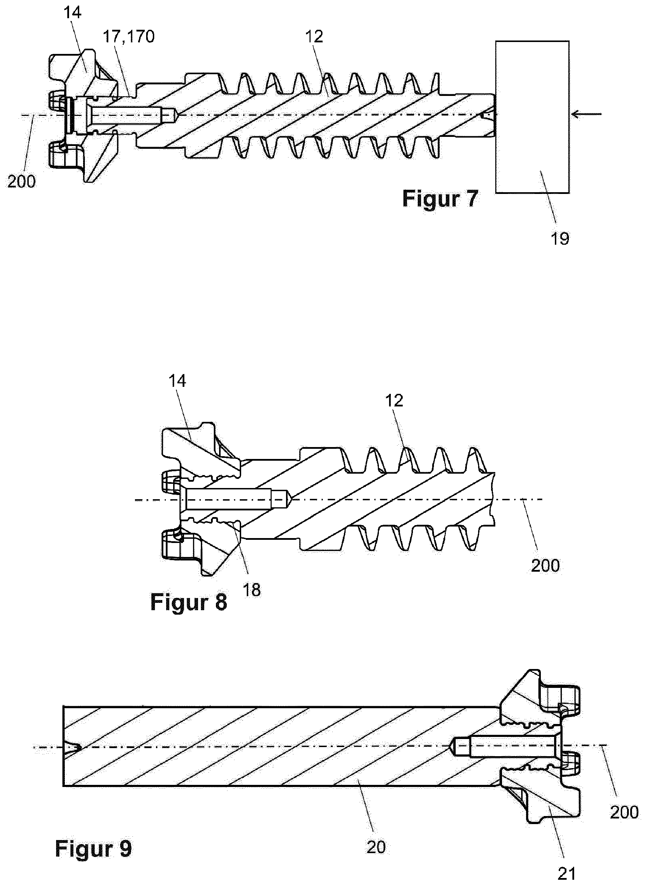

Figur 7 zeigt schematisch die Befestigung des ersten Kupplungsteils 14 auf der Schneckenwelle 12 mittels Ultraschallschweißen. Bei der Montage des ersten Kupplungsteils 14 auf der Schneckenwelle 12 wird das Kupplungsteil 14 soweit wie möglich mit einem vordefinierten Anpressdruck auf die Schneckenwelle 12 aufgeschoben bis ein Kontakt zwischen einem Befestigungsbereich 170 an einer Außenfläche der Schneckenwelle und einer Innenfläche des ersten Kupplungsteils 14, beispielsweise über eine Rändelung entsteht. Das erste Kupplungsteil 14 weist eine zentrale Ausnehmung 18 auf, deren Durchmesser D1 zumindest teilweise kleiner als der Außendurchmesser D2 der Schneckenwelle 12 im Befestigungsbereich 170 gestaltet ist. Nach dem ersten Aufsetzten des ersten Kupplungsteils 14 auf dem Befestigungsbereich 170 der Schneckenwelle 12 wird mittels Ultraschallschweißen eine stoffschlüssige Verbindung zwischen dem Kupplungsteil 14 und der Schneckenwelle 12, wie in Figur 8 dargestellt, hergestellt. Die Sonotrode 19 setzt bei diesem Ausführungsbeispiel an der Schneckenwelle 12 an. Bei diesem Montageschritt werden hochfrequente mechanische Schwingungen im Ultraschallbereich in die Schneckenwelle mittels Sonotrode 19 eingeleitet, die in Resonanzschwingungen versetzt wird. Frequenzbereich der Resonanzschwingung liegt zwischen 10 und 90 kHz, bevorzugt bei 20 kHz. Die Schwingungsrichtung ist senkrecht zur Fügefläche mit dem Kupplungsteil gerichtet, damit die Fügepartner sich aneinander reiben. Das Kupplungsteil 14 wird dabei mit einem definierten Anpressdruck auf die Schneckenwelle 12 entlang einer Schneckenachse 200 gepresst. Durch die Grenzflächenreibung bei definiertem Anpressdruck wird das Kupplungsteil 14 an der Berührungsfläche mit der Welle 12 lokal erwärmt, aufgeschmolzen und dadurch plastisch verformbar. Durch Fortsetzung des Drucks sinkt die Welle 12 in die bevorzugt als Bohrung ausgeführte Ausnehmung 18 ein. Dabei umfließt die aufgeschmolzene Masse die Hinterschneidungen der Verzahnung oder der Rändelung und verankert diesen beim nachfolgenden Erstarrungsprozess. Die Schneckenwelle 12 ist bevorzugt aus Metall und die Kupplung aus einem thermoplastischen Kunststoff hergestellt. Durch das Ultraschallschweißen verbindet sich die Schneckenwelle 12 somit mit dem ersten Kupplungsteil 14 stoff- und formschlüssig.

Figur 9 zeigt die Motorwelle 20 (Rotorwelle des Elektromotors) und das zweite Kupplungsteil 21, die ebenfalls mittels Ultraschallschweißen verbunden wurden. Die Motorwelle 20 und das zweite Kupplungsteil 21 wurden, wie zuvor für die Schneckenwelle 12 erläutert, dadurch stoff- und formschlüssig verbunden. Dabei können die Motorwelle 20 und/oder das zweite Kupplungsteil 21 die Verzahnung oder Rändelung tragen.

Erfindungsgemäß wird daher eine sich drehende Welle mit einem Teil einer Kupplung mittels Ultraschallschweißen verbunden, wobei die sich drehende Welle eine Rotorwelle des Elektromotors oder eine Schneckenwelle des Getriebes sein kann.

## Patentansprüche

1. Kraftfahrzeuglenkung, umfassend einen Elektromotor (9) mit einer Motowelle (20), ein Schneckengetriebe (11) mit einer Schneckenwelle (12) und eine Kupplung (15), die die beiden Wellen (20,12) zur Übertragung eines Drehmomentes verbindet, wobei die Kupplung (15) ein erstes Kupplungsteil (14) und ein zweites Kupplungsteil (21) aufweist, die jeweils mit einer der Wellen (20,12) verbunden sind, **dadurch gekennzeichnet, dass** das entsprechende Kupplungsteil (21, 14) aus einem thermoplastischen Kunststoff gefertigt ist und mindestens eine der Wellen (20,12) mit dem entsprechenden Kupplungsteil (21,14) durch eine Verbindung mittels Ultraschallschweißen verbunden ist, wobei die zu verbindende Welle (20,12) auf einer Außenseite in einem Befestigungsbereich (170) eine Rändelung (17) aufweist.

2. Kraftfahrzeuglenkung nach Anspruch 1, **dadurch gekennzeichnet, dass** die Verbindung stoff- und formschlüssig ist.

3. Kraftfahrzeuglenkung nach Anspruch 1 oder 2, **dadurch gekennzeichnet, dass** die zu verbindende Welle (20,12) als Sonotrode während des Ultraschallschweißens fungiert.

4. Kraftfahrzeuglenkung nach einem der vorhergehenden Ansprüche, **dadurch gekennzeichnet, dass** das zu verbindende Kupplungsteil (21,14) auf einer Innenseite in einem Befestigungsbereich eine Rändelung (16) aufweist.

5. Verfahren zur Verbindung einer Welle (20,12) einer Kraftfahrzeuglenkung mit einem Kupplungsteil (21,14) einer Kupplung (15), die zwei Wellen (20,12) verbindet, wobei eine der Wellen eine Schneckenwelle (12) und die andere Welle eine Motorwelle (20) eines Elektromotors (9) der Kraftfahrzeuglenkung ist, und wobei die Kupplung (15) zwei Kupplungsteile (21,14) aufweist, die jeweils mit einer der Wellen (20,12) verbunden sind, **dadurch gekennzeichnet, dass** das Verfahren folgende Schritte aufweist:
- Zumindest teilweises Einbringen der Welle (20,12) in das entsprechende Kupplungsteil (21,14) mit einem definierten Anpressdruck,
- Einleiten einer hochfrequenten mechanischen Schwingung im Ultraschallbereich in die Welle (20,12),
- Einpressen der Welle (20,12) in das entsprechende Kupplungsteil (21,14) mit einem definierten Anpressdruck,
wobei das entsprechende Kupplungsteil (21,14) aus einem thermoplastischen Kunststoff gefertigt ist und dass bei dem Einleiten der hochfrequenten mechanischen Schwingung in die Welle (20,12) das entsprechende Kupplungsteil (21,14) teilweise erwärmt und plastifiziert wird,
wobei die Welle (20,12) auf der Außenseite eine Rändelung (17) aufweist und das plastifizierte Kupplungsteil (21,14) Hinterschneidungen der Rändelung (17) umfließt, sodass nach dem Abkühlen eine form- und stoffschlüssige Verbindung zwischen dem Kupplungsteil (21,14) und der Welle (20,12) entsteht.

6. Verfahren nach Anspruch 5, **dadurch gekennzeichnet, dass** die hochfrequente Schwingung in einem Bereich von 10 bis 40 kHz liegt.

7. Verfahren nach Anspruch 5 oder 6, **dadurch gekennzeichnet, dass** die hochfrequente Schwingung 20 kHz beträgt.

## Claims

1. Motor vehicle steering mechanism, comprising an electric motor (9) with a motor shaft (20), a worm gear (11) with a worm shaft (12) and a coupling (15), which connects the two shafts (20, 12) for the transmission of a torque, the coupling (15) having a first coupling part (14) and a second coupling part (21), which are respectively connected to one of the shafts (20, 12), **characterized in that** the corresponding coupling part (21, 14) is produced from a thermoplastic material and at least one of the shafts (20, 12) is connected to the corresponding coupling part (21, 14) by a connection by means of ultrasonic welding, the shaft (20, 12) to be connected having a knurling (17) on an outer side in a fastening region (170).

2. Motor vehicle steering mechanism according to Claim 1, **characterized in that** the connection is a substance-to-substance-bonding and form-fitting connection.

3. Motor vehicle steering mechanism according to Claim 1 or 2, **characterized in that** the shaft (20, 12) to be connected acts as a sonotrode during the ultrasonic welding.

4. Motor vehicle steering mechanism according to one of the preceding claims, **characterized in that** the coupling part (21, 14) to be connected has a knurling (16) on an inner side in a fastening region.

5. Method for connecting a shaft (20, 12) of a motor vehicle steering mechanism to a coupling part (21, 14) of a coupling (15), which connects two shafts (20, 12), one of the shafts being a worm shaft (12) and the other shaft being a motor shaft (20) of an electric motor (9) of the motor vehicle steering mechanism, and the coupling (15) having two coupling parts (21, 14), which are respectively connected to one of the shafts (20, 12), **characterized in that** the method comprises the following steps:
- at least partially inserting the shaft (20, 12) into the corresponding coupling part (21, 14) with a defined pressing pressure,
- introducing a high-frequency mechanical oscillation in the ultrasound range into the shaft (20, 12),
- pressing the shaft (20, 12) into the corresponding coupling part (21, 14) with a defined pressing pressure,
the corresponding coupling part (21, 14) being produced from a thermoplastic material and the corresponding coupling part (21, 14) being partially heated and plasticated when the high-frequency mechanical oscillation is introduced into the shaft (20, 12),
the shaft (20, 12) having a knurling (17) on the outer side and the plasticated coupling part (21, 14) flowing around undercuts of the knurling (17), so that, after cooling down, a form-fitting and substance-to-substance-bonding connection is obtained between the coupling part (21, 14) and the shaft (20, 12).

6. Method according to Claim 5, **characterized in that** the high-frequency oscillation lies in a range from 10 to 40 kHz.

7. Method according to Claim 5 or 6, **characterized in that** the high-frequency oscillation is 20 kHz.

## Revendications

1. Direction de véhicule automobile, comprenant un moteur électrique (9) doté d'un arbre de moteur (20), un réducteur à vis (11) doté d'un arbre de vis sans fin (12), et un accouplement (15) qui relie les deux arbres (20, 12) pour la transmission d'un couple, l'accouplement (15) présentant une première partie d'accouplement (14) et une deuxième partie d'accouplement (21) qui sont respectivement reliées à l'un des arbres (20, 12),
**caractérisée en ce que** la partie d'accouplement correspondante (21, 14) est fabriquée en matière synthétique thermoplastique, et au moins l'un des arbres (20, 12) est relié à la partie d'accouplement correspondante (21, 14) par une liaison au moyen d'un soudage par ultrasons, l'arbre à relier (20, 12) présentant un moletage (17) sur une face extérieure dans une zone de fixation (170).

2. Direction de véhicule automobile selon la revendication 1, **caractérisée en ce que** la liaison est de matière et par complémentarité de forme.

3. Direction de véhicule automobile selon la revendication 1 ou 2, **caractérisée en ce que** l'arbre à relier (20, 12) sert de sonotrode pendant le soudage par ultrasons.

4. Direction de véhicule automobile selon l'une quelconque des revendications précédentes, **caractérisée en ce que** la partie d'accouplement à relier (21, 14) présente un moletage (16) sur une face intérieure dans une zone de fixation.

5. Procédé permettant de relier un arbre (20, 12) d'une direction de véhicule automobile à une partie d'accouplement (21, 14) d'un accouplement (15) reliant deux arbres (20, 12), l'un des arbres étant un arbre de vis sans fin (12) et l'autre arbre étant un arbre de moteur (20) d'un moteur électrique (9) de la direction de véhicule automobile, et l'accouplement (15) présentant deux parties d'accouplement (21, 14) qui sont respectivement reliées à l'un des arbres (20, 12), **caractérisé en ce que** le procédé comprend les étapes suivantes consistant à :
- introduire au moins en partie l'arbre (20, 12) dans la partie d'accouplement correspondante (21, 14) à une pression de contact définie,
- déclencher dans l'arbre (20, 12) une vibration mécanique haute fréquence dans le domaine des ultrasons,
- presser l'arbre (20, 12) dans la partie d'accouplement correspondante (21, 14) à une pression de contact définie,
dans lequel la partie d'accouplement correspondante (21, 14) est fabriquée en matière synthétique thermoplastique, et lors du déclenchement de la vibration mécanique haute fréquence dans l'arbre (20, 12), la partie d'accouplement correspondante (21, 14) est partiellement chauffée et plastifiée,
l'arbre (20, 12) présentant un moletage (17) sur la face extérieure, et la partie d'accouplement plastifiée (21, 14) s'écoulant autour de contre-dépouilles du moletage (17) de sorte qu'après refroidissement, une liaison par complémentarité de forme et de matière est créée entre la partie d'accouplement (21, 14) et l'arbre (20, 12).

6. Procédé selon la revendication 5, **caractérisé en ce que** la vibration haute fréquence se situe dans une plage de 10 à 40 kHz.

7. Procédé selon la revendication 5 ou 6, **caractérisé en ce que** la vibration haute fréquence est de 20 kHz.
